# EUROPEAN PATENT SPECIFICATION

(11) **EP 4 456 592 B1**
(45) Date of publication and mention of the grant of the patent: **02.09.2026**
(21) Application number: 21968440.4
(22) Date of filing: 20.12.2021
(51) Int. Cl.: H04W 24/02, H04W 84/12, H04W 88/08, H04W 4/38, H04W 4/80

(54) **METHOD AND APPARATUS FOR TERMINATING PROXY IN WLAN SENSING, AND ELECTRONIC DEVICE AND STORAGE MEDIUM**
VERFAHREN UND VORRICHTUNG ZUM BEENDEN EINES PROXY IN EINER WLAN-ERFASSUNG SOWIE ELEKTRONISCHE VORRICHTUNG UND SPEICHERMEDIUM
PROCÉDÉ ET APPAREIL D'INTERRUPTION DE MANDATAIRE DANS UNE DÉTECTION DE WLAN, DISPOSITIF ÉLECTRONIQUE ET SUPPORT DE STOCKAGE

(43) Date of publication of application: 30.10.2024
(73) Proprietor: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2021/139826
(87) International publication number: WO 2023/115286

(56) References cited:
- WO-A1-2021/114168
- WO-A9-2023/020719
- CN-A- 112 689 300
- CN-A- 112 738 758
- TR-A2- 2021 012 978
- US-A1- 2009 210 530

## Description

### TECHNICAL FIELD

Embodiments of the present disclosure relate to the field of mobile communication technology, and in particular, to a method and apparatus for terminating a proxy of WLAN sensing, an electronic device, and a storage medium.

### BACKGROUND

With the rapid development of mobile communication technologies, wireless fidelity (Wi-Fi) technology has gained great progress in terms of transmission rate, throughput, or the like. At present, main application scenarios of the content studied for Wi-Fi technology, such as bandwidth transmission in 320 MHz, aggregation and collaboration of multiple frequency bands, or the like, includes video transmission, augmented reality (AR), virtual reality (VR), or the like.

In the currently studied Wi-Fi technology, a wireless local area network (WLAN) sensing technology may be supported, for example, in application scenarios such as location discovery, proximity detection, presence detection, or the like in a dense environment (for example, a home environment and an enterprise environment). In a WLAN sensing process, identities of a station (STA) and an access point (AP) may usually be interchangeable; for example, both of the station (STA) and the access point (AP) may be used as sending initiators (or sending transmitters). When used as a sensing initiator or a sensing transmitter, the AP may communicate with a plurality of STAs at the same time; however, the STA does not have this function, and may only communicate with a single responder (a sensing responder) in a one-to-one manner. On one hand, spectrum resource waste is caused. On the other hand, increasing of latency is caused. For a communication scenario with a relatively higher latency requirement, the latency requirement may not be met. In order to solve this problem, there is proposed a manner in which an AP is used as a proxy for a STA to perform sensing measurement. Therefore, there is a need to provide a manner for terminating proxy in the process that an AP initiates a sensing measurement as a proxy for a STA. Related technologies are known from a patent publication document TR2021012978A2.

### SUMMARY

The invention is defined by the independent claims. Embodiments of the present invention provide a method and apparatus for terminating a proxy of WLAN sensing, an electronic device, and a storage medium, to provide a manner for terminating proxy in the process that an AP initiates a sensing measurement as a proxy for a STA.

In an aspect, according to embodiments of the present invention, there is provided a method for terminating a proxy of WLAN sensing, applied to a proxy access point (AP), and the method includes:
determining sensing measurement identification information of a wireless local area network (WLAN) sensing measurement, where the sensing measurement identification information includes a sensing session identification and/or a sensing measurement establishment identification; and
terminating a proxy of a WLAN sensing measurement corresponding to the sensing measurement identification information; where the proxy AP is configured to, when the STA serves as an initiator to perform one-to-multi communication with a responder, perform WLAN sensing measurement as a proxy for the STA.

In another aspect, according to embodiments of the present invention , there is provided a method for terminating a proxy of WLAN sensing, applied to a station (STA), and the method includes:
sending a first termination request carrying with sensing measurement identification information to a proxy access point (AP) to instruct the proxy AP to terminate a proxy of a WLAN sensing measurement corresponding to the sensing measurement identification information;
where, the sensing measurement identification information includes a sensing session identification and/or a sensing measurement establishment identification; and the proxy AP is configured to, when the STA serves as an initiator to perform one-to-multi communication with a responder, perform WLAN sensing measurement as a proxy for the STA.

Also disclosed is a proxy access point (AP), wherein the proxy AP includes:
a determination module, configured to determine sensing measurement identification information of a wireless local area network (WLAN) sensing measurement, where the sensing measurement identification information includes a sensing session identification and/or a sensing measurement establishment identification; and
a termination module, configured to terminate a proxy of a WLAN sensing measurement corresponding to the sensing measurement identification information; where the proxy AP is configured to, when the STA serves as an initiator to perform one-to-multi communication with a responder, perform WLAN sensing measurement as a proxy for the STA.

Also disclosed is a station (STA), wherein the STA includes:
a sending module, configured to send a first termination request carrying with sensing measurement identification information to a proxy access point (AP) to instruct the proxy AP to terminate a proxy of a WLAN sensing measurement corresponding to the sensing measurement identification information;
where, the sensing measurement identification information includes a sensing session identification and/or a sensing measurement establishment identification; and the proxy AP is configured to, when the STA serves as an initiator to perform one-to-multi communication with a responder, perform WLAN sensing measurement as a proxy for the STA.

In another aspect, according to embodiments of the present invention, there is provided an apparatus for terminating a proxy of WLAN sensing, applied to a proxy access point (AP), and the apparatus includes:
an information determination module, configured to determine sensing measurement identification information of a wireless local area network (WLAN) sensing measurement, where the sensing measurement identification information includes a sensing session identification and/or a sensing measurement establishment identification; and
a sensing termination module, configured to terminate a proxy of a WLAN sensing measurement corresponding to the sensing measurement identification information; where the proxy AP is configured to, when the STA serves as an initiator to perform one-to-multi communication with a responder, perform WLAN sensing measurement as a proxy for the STA.

**In** another aspect, according to embodiments of the present invention, there is provided an apparatus for terminating a proxy of WLAN sensing, applied to a station (STA), and the apparatus includes:
a request sending module, configured to send a first termination request carrying with sensing measurement identification information to a proxy access point (AP) to instruct the proxy AP to terminate a proxy of a WLAN sensing measurement corresponding to the sensing measurement identification information;
where, the sensing measurement identification information includes a sensing session identification and/or a sensing measurement establishment identification; and the proxy AP is configured to, when the STA serves as an initiator to perform one-to-multi communication with a responder, perform WLAN sensing measurement as a proxy for the STA.

Also disclosed is an electronic device, including a memory, a processor, and a computer program stored in the memory and executable on the processor; when the processor executes the program, the method according to one or more of the embodiments of the present disclosure is implemented.

According to embodiments of the present invention, there is further provided a computer-readable storage medium; the computer-readable storage medium stores a computer program; and when the computer program is executed by a processor, the method according to one or more of the embodiments of the present disclosure is implemented.

**In the** embodiments of the present invention, sensing measurement identification information of a wireless local area network (WLAN) sensing measurement is determined; the sensing measurement identification information includes a sensing session identification and/or a sensing measurement establishment identification; a proxy of a WLAN sensing measurement corresponding to the sensing measurement identification information is terminated. Through initiating a WLAN sensing measurement by a proxy sensing initiator and terminating the proxy, one-to-multi communication between the initiator and the responder can be implemented when the STA serves as an initiator. Embodiments of the present disclosure provide a manner for terminating proxy in the process that an AP initiates a sensing measurement as a proxy for a STA.

Additional aspects and advantages of the embodiments of the present invention will be given in part described below, which will become apparent from the following description, or be learned from the practice of the present disclosure.

### BRIEF DESCRIPTION OF THE DRAWINGS

In order to more clearly illustrate the technical solutions of the embodiments of the present invention, the drawings required to be used in the description of the embodiments of the present invention will be briefly described below. Obviously, the accompanying drawings in the following description are merely some embodiments of the present invention, and those of ordinary skill in the art may obtain other drawings according to these accompanying drawings without creative efforts.
FIG. 1 is a first flowchart of a method for terminating a proxy of WLAN sensing provided according to an embodiment of the present disclosure;
FIG. 2 is a first schematic diagram of a first example according to an embodiment of the present disclosure;
FIG. 3 is a second schematic diagram of a first example according to an embodiment of the present disclosure;
FIG. 4 is a third schematic diagram of a first example according to an embodiment of the present disclosure;
FIG. 5 is a schematic diagram of a second example according to an embodiment of the present disclosure;
FIG. 6 is a schematic diagram of a third example according to an embodiment of the present disclosure;
FIG. 7 is a schematic diagram of a fourth example according to an embodiment of the present disclosure;
FIG. 8 is a schematic diagram of a fifth example according to an embodiment of the present disclosure;
FIG. 9 is a second flowchart of a method for terminating a proxy of WLAN sensing provided according to an embodiment of the present disclosure;
FIG. 10 is a schematic structural diagram of an access point provided according to an embodiment of the present disclosure;
FIG. 11 is a first schematic structural diagram of an apparatus for terminating a proxy of WLAN sensing provided according to an embodiment of the present disclosure;
FIG. 12 is a schematic structural diagram of a station provided according to an embodiment of the present disclosure;
FIG. 13 is a second schematic structural diagram of an apparatus for terminating a proxy of WLAN sensing provided according to an embodiment of the present disclosure;
FIG. 14 is a schematic structural diagram of an electronic device provided according to an embodiment of the present disclosure.

### DETAILED DESCRIPTION

In the embodiments of the present disclosure, the term "and/or" describes the association relationship of the associated objects, indicating that there may be three relationships; for example, A and/or B may indicate three situations that A exists alone, A and B exist simultaneously, and B exists alone. The character "/" generally indicates an "or" relationship between the associated objects before and after.

In the embodiments of the present disclosure, the term "plurality" refers to two or more, and the other quantifiers are similar to it.

Example embodiments will be described in detail here, examples of which are illustrated in the accompanying drawings. The following description refers to the accompanying drawings in which the same numbers in different drawings represent the same or similar elements, unless otherwise represented. The implementations described in the following example embodiments do not represent all implementations consistent with the present disclosure. On the contrary, they are merely examples of apparatuses and methods consistent with some aspects related to the present invention as recited in the appended claims.

The terms used in the present disclosure are for the purpose of describing particular embodiments only, and are not intended to be limiting of the present disclosure. As used in the present disclosure and the appended claims, the singular forms "a", "the" and "said" are intended to include the plural forms as well, unless the context clearly indicates otherwise. It should also be understood that the term "and/or" used here refers to and includes any or all possible combinations of one or more associated listed items.

It should be understood that although the terms first, second, third, or the like, may be used in the present disclosure to describe various information, these information should not be limited to these terms. These terms are only used to distinguish the same type of information from each other. For example, without departing from the scope of the present disclosure, the first information may also be referred to as second information; and similarly, the second information may also be referred to as first information. Depending on the context, for example, the word "if" used here may be interpreted as "at the time", "when" or "in response to determining".

The technical solutions in the embodiments of the present invention will be clearly and completely described below with reference to the accompanying drawings in the embodiments of the present disclosure. Obviously, the described embodiments are only some embodiments of the present invention and not all the embodiments.

According to embodiments of the present invention, there is provided a method and apparatus for terminating a proxy of WLAN sensing, an electronic device, and a storage medium, to provide a manner for terminating proxy in the process that an AP initiates a sensing measurement as a proxy for a STA.

Among them, the method and the apparatus are based on the same application concept. Since the principles of the method and the apparatus to solve the problem are similar, the implementations of the apparatus and the method may be referred to each other, and repeated parts are not described again.

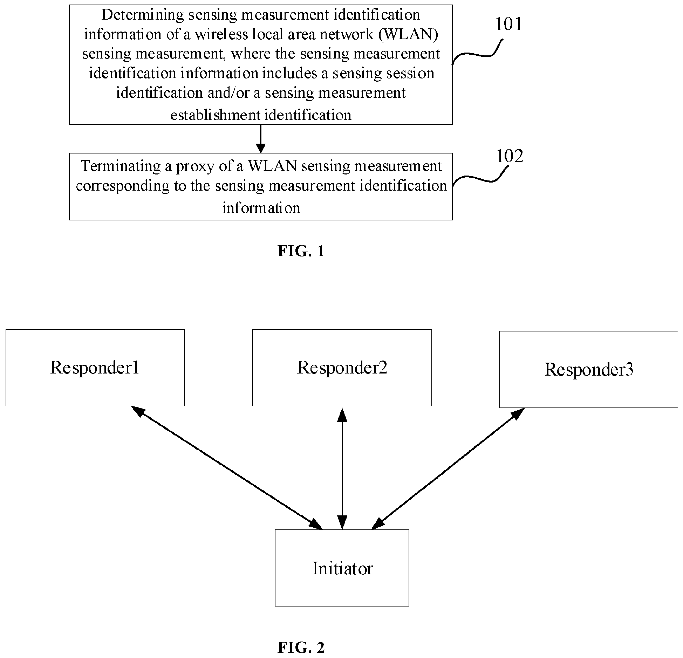

As shown in FIG. 1, according to an embodiment of the present invention, there is provided a method for terminating a proxy of WLAN sensing, and optionally, the method may be applied to a proxy access point (AP), and the method may include the following steps.

In step 101, sensing measurement identification information of a wireless local area network (WLAN) sensing measurement is determined, where the sensing measurement identification information includes a sensing session identification and/or a sensing measurement establishment identification.

As a first example, referring to FIG. 2 to FIG. 4, a WLAN sensing architecture and a WLAN sensing process, to which terminating a proxy of WLAN sensing provided according to embodiments of the present disclosure is applied, are firstly introduced.

FIG. 2 shows a schematic diagram of an architecture for WLAN sensing (process), where a sensing initiator (or, an initiator) initiates WLAN sensing (for example, initiating a WLAN sensing session), and there may be a plurality of sensing responders (or, sensing receivers) or responders that respond to it, such as the responder 1, the responder 2, and the responder 3 in FIG. 2. When the sensing initiator initiates the WLAN sensing, a plurality of associated or non-associated sensing responders for the WLAN sensing may respond.

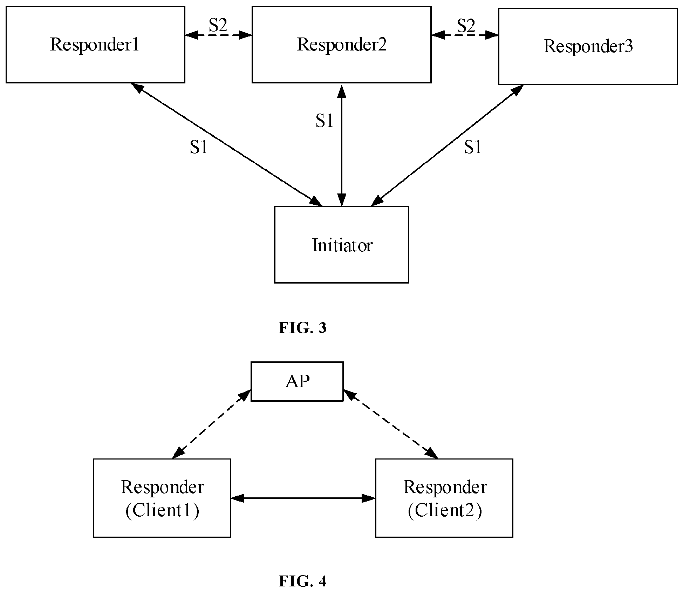

Referring to FIG. 3, communication is performed between the sensing initiator and the sensing responder through a communication connection, such as the communication connection S1 shown in the drawing; and communication is performed between the sensing responders through the communication connection S2.

Among them, each sensing initiator may be a client; and each sensing responder (e.g., the sensing responder 1 to the sensing responder 3 in this example) may be a station (STA). The STA may play a plurality of roles in a WLAN sensing process. For example, in a WLAN sensing process, the sensing initiator may be a sensing transmitter, a sensing receiver, or a sensing transmitter and receiver, or neither a sensing transmitter nor a sensing receiver. In a WLAN sensing process, the sensing responder may also be a sensing transmitter, a sensing receiver, or a sensing transmitter and receiver.

As another architecture, as shown in FIG. 4, the sensing initiator and the sensing responder may both be clients, communication between which may be performed through connection to a same AP. In FIG. 4, Client1 is a sensing initiator, and Client 2 is a sensing responder.

In the WLAN sensing process, in order to implement one-to-multi communication between the initiator and the responder when the STA serves as the initiator, the AP performs WLAN sensing measurement as a proxy for the sensing initiator (for example, the STA). When the WLAN sensing needs to be terminated (or stopped), the AP determines the sensing measurement identification information of the WLAN sensing measurement, so as to determine to terminate a proxy of the WLAN sensing measurement. Among them, the sensing measurement identification information includes a sensing session identification and/or a sensing measurement establishment identification; the sensing session identification is used to identify a sensing session corresponding to the WLAN sensing measurement; and, the sensing measurement establishment identification is used to identify a sensing session establishment initiation message frame.

Optionally, the sensing measurement identification information may be from the STA, or may be obtained by negotiation between the AP and the sensing initiator (the requesting STA) in the process of establishing a proxy of the sensing measurement, or may be obtained by negotiation between the AP and the sensing responder (the STA participating in the sensing measurement) in the process of establishing the sensing measurement. That is, both the initiator and the responder of the WLAN sensing measurement can initiate measurement termination.

**In** step 102, a proxy of a WLAN sensing measurement corresponding to the sensing measurement identification information is terminated.

After determining the sensing session identification and/or the sensing measurement establishment identification, the WLAN sensing measurement corresponding to the sensing session identification is terminated, or the WLAN sensing measurement corresponding to the sensing measurement establishment identification is terminated. In this way, in the WLAN sensing process, in the case that the sensing initiator is a STA, the AP performs the sensing measurement as a proxy for the sensing initiator, and terminates the proxy of the WLAN sensing measurement according to the sensing measurement identification information, so as to implement one-to-multi communication, and reduce frequency spectrum resource waste and latency caused by WLAN sensing performed by the STA as an initiator.

**In the** embodiments of the present invention, sensing measurement identification information of a wireless local area network (WLAN) sensing measurement is determined, where the sensing measurement identification information includes a sensing session identification and/or a sensing measurement establishment identification; and, a proxy of a WLAN sensing measurement corresponding to the sensing measurement identification information is terminated. Through initiating a WLAN sensing measurement by a proxy sensing initiator and terminating the proxy, one-to-multi communication between the initiator and the responder can be implemented when the STA serves as an initiator. Embodiments of the present disclosure provide a manner for terminating proxy in the process that an AP initiates a sensing measurement as a proxy for a STA.

**In** an optional embodiment, determining the sensing measurement identification information of the wireless local area network (WLAN) sensing measurement includes the first case or the second case.

**In** case 1, a first termination request sent by a station (STA) is received, sensing measurement identification information carried in the first termination request is obtained;

In case 2, after sending a measurement report of the WLAN sensing measurement, sensing measurement identification information of the WLAN sensing measurement is determined.

Specifically, in case 1, the AP receives a first termination request sent by the STA, where the STA includes at least one of a first STA or a second STA.

The first STA includes a sensing initiator that initiates the WLAN sensing measurement process, for example, the sensing initiator is a requesting STA. After receiving the measurement report sent by the sensing proxy (a proxy AP), the requesting STA may send a first termination request, and the first termination request may include a termination of proxy message frame.

It should be noted that, in the embodiments of the present invention, the first STA may also participate in the WLAN sensing measurement as a responder. Therefore, the second STA mentioned in the embodiments of the present disclosure does not include the requesting STA; that is, the second STA is a sensing responder other than the requesting STA.

The second STA includes a sensing responder that participates in the WLAN sensing measurement, and the sensing responder includes a STA that participates in the sensing measurement (a non-requesting STA).

In case 2, after the proxy AP completes sending of the measurement report, the proxy AP may determine the sensing measurement identification information of the WLAN sensing measurement, and initiate a termination of proxy procedure.

Optionally, in an embodiment of the present invention , in the case 1, in the case that the STA includes the first STA, terminating a proxy of the WLAN sensing measurement corresponding to the sensing measurement identification information, includes case 3 or case 4.

In case 3, if the first STA participates in the WLAN sensing measurement, a first termination response is sent to the first STA, and a proxy of a WLAN sensing measurement corresponding to the sensing measurement identification information is terminated.

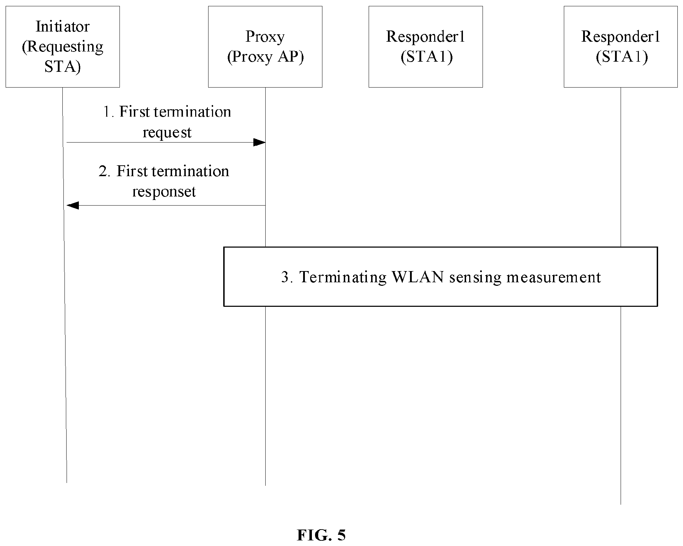

As a second example, referring to FIG. 5, FIG. 5 shows a scenario of case 3, in which the first STA participates in the WLAN sensing measurement, and the following steps are mainly included.

In step 1, the requesting STA sends a first termination request (an initial termination request).

After receiving the measurement report sent by the sensing proxy (a proxy AP), the requesting STA sends a first termination request to the proxy AP. In the first termination request, a sensing measurement process corresponding to the sensing measurement setup ID carried in the measurement report frame or a sensing session requested to be terminated is identified. The sensing session may include one or more sensing measurement processes; that is, all proxies of sensing measurement established with the AP are terminated.

In step 2, the proxy AP sends a first termination response (an initial sensing termination response).

In the first termination response, a specific sensing measurement process or a sensing session to be terminated is identified. If the requesting STA participates in the WLAN sensing measurement, the requesting STA may terminate the WLAN sensing measurement by itself, and the proxy AP does not need to terminate the sensing measurement again with it.

In step 3, the WLAN sensing measurement is terminated (a sensing measurement termination procedure).

The proxy AP terminates a proxy of the WLAN sensing measurement between the proxy AP and the sensing responder 1 (i.e., STA1) to the sensing responder n (i.e., STAn), which includes terminating the sensing measurement process corresponding to the measurement setup ID and/ or the sensing session ID in the initial termination request or the initial sensing termination response frame.

In case 4, if the first STA does not participate in the WLAN sensing measurement, an acknowledgement (ACK) message is sent to the first STA, a proxy of the WLAN sensing measurement corresponding to the sensing measurement identification information is terminated, and a first termination response is sent to the first STA. Among them, the ACK message indicates that the proxy AP will terminate the WLAN sensing measurement between the proxy AP and the device participating in the WLAN sensing measurement, and feed the first termination response back to the first STA after the termination operation is completed.

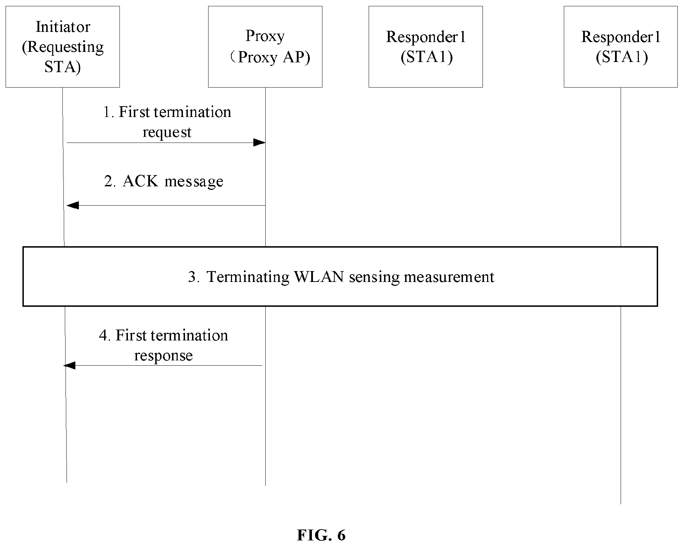

As a third example, referring to FIG. 6, FIG. 6 shows a scenario of case 4, in which the first STA does not participate in the WLAN sensing measurement, and the following steps are mainly included.

In step 1, the requesting STA sends a first termination request (an initial termination request).

After receiving the measurement report sent by the sensing proxy (a proxy AP), the requesting STA sends a first termination request to the proxy AP. In the first termination request, the sensing session requested to be terminated is identified. In the first termination request, a sensing measurement process corresponding to sensing measurement setup ID carried in the measurement report frame or a sensing session requested to be terminated is identified. The sensing session may include one or more sensing measurement processes; that is, all proxies of sensing measurement established with the AP are terminated.

In step 2, the proxy AP sends an acknowledgement message (an ACK message).

In step 3, the proxy AP terminates the WLAN sensing measurement (a sensing measurement termination procedure).

The proxy AP terminates a proxy of the WLAN sensing measurement between the proxy AP and the sensing responder 1 (i.e., STA1) to the sensing responder n (i.e., STAn).

In step 4, the proxy AP sends a first termination response (an initial termination response).

In the first termination response, it is identified that the proxy AP has terminated the WLAN sensing measurement between the proxy AP and the sensing responder 1 (i.e., STA1) to the sensing responder 1 (i.e., STAn), which includes terminating the sensing measurement process corresponding to the measurement setup ID and/ or the sensing session ID in the initial termination request or the initial sensing termination response frame.

In an optional embodiment, in case 1, in the case that the STA includes the second STA, terminating a proxy of the WLAN sensing measurement corresponding to the measurement identification information includes:
sending a second termination request to the first STA, and receiving a second termination response sent by the first STA; and
sending a third termination response to the second STA, and terminating a proxy of the WLAN sensing measurement corresponding to the sensing measurement identification information.

Among them, the STA participating in the sensing measurement sends a first termination request to the proxy AP. In the first termination request, a sensing session requested to be terminated is identified, for example, by using a measurement setup ID and/or a sensing session ID. After receiving the first termination request, the proxy AP sends a second termination request to the first STA. In the second termination request, a sensing session requested to be terminated may also need to be identified, for example, by using a measurement setup ID and/or a sensing session ID. The proxy AP receives a second termination response fed back by the first STA for the second termination request, then feeds a third termination response back to the second STA, and terminates a proxy of the WLAN sensing measurement corresponding to the sensing measurement identification information.

It may be understood that the third termination response may include the first termination response in the foregoing case 3, or the ACK message in the foregoing case 4. The processes implemented subsequently on the requesting STA side may be referred to the processes in the foregoing case 3 or case 4 correspondingly, and details are not described here again.

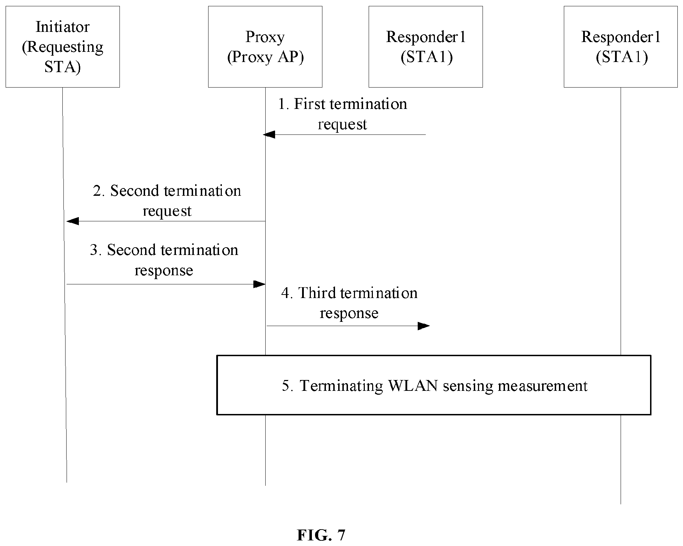

As a fourth example, referring to FIG. 7, FIG. 7 shows a scenario of case 1, in which the second STA includes a STA1, and the following steps are mainly included.

In step 1, STA1 sends a first termination request (an initial termination request).

The STA1 sends a first termination request to the proxy AP. In the first termination request, a sensing session requested to be terminated is identified. In the first termination request, a sensing session requested or a sensing measurement process corresponding to sensing measurement setup ID carried in the measurement report frame, which is to be terminated, is identified. The sensing session may include one or more sensing measurement processes; that is, all proxies of the sensing measurement established with the AP are terminated.

In step 2, the proxy AP sends a second termination request to the requesting STA. In the second termination request, the sensing measurement process corresponding to the sensing measurement setup ID carried in the measurement report frame or the sensing session requested to be terminated is identified.

In step 3, the requesting STA sends a second termination response (a termination response) to the proxy AP.

In step 4, the proxy AP sends a third termination response (a termination response) to the STA1.

In step 5, the proxy AP terminates the WLAN sensing measurement (a sensing measurement termination procedure).

The proxy AP terminates a proxy of the WLAN sensing measurement between the proxy AP and the sensing responder 1 (i.e., STA1) to the sensing responder n (i.e., the STAn).

In an optional embodiment, in case 2, after determining the sensing measurement identification information of the WLAN sensing measurement, the method includes:
sending a third termination request to the first STA, and receiving a fourth termination response or an ACK message sent by the first STA.

After the proxy AP completes sending of the measurement report, the proxy AP may initiate a termination of proxy procedure, determine the sensing measurement identification information of the WLAN sensing measurement, send a third termination request that includes the sensing measurement identification information (such as a sensing session identification and/or a sensing measurement establishment identification) to the first STA, and receive a fourth termination response or an ACK message sent by the first STA.

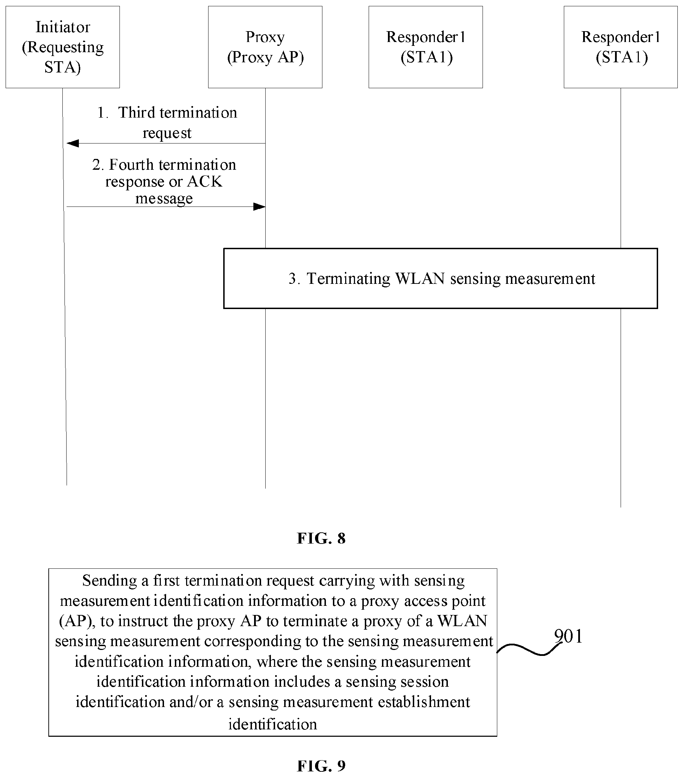

As a fifth example, referring to FIG. 8, FIG. 8 shows a scenario of case 2, in which the proxy AP may initiate a termination of proxy procedure, and the following steps are mainly included.

In step 1, the proxy AP sends a third termination request (an initial termination request). The third termination request may include sensing measurement identification information, for example, a sensing session identification and/or a sensing measurement establishment identification.

In step 2, the requesting STA sends a fourth termination response or an acknowledge (ACK) message (an initial termination response), to identify that the request of the proxy AP is accepted.

In step 3, the proxy AP terminates the WLAN sensing measurement (a sensing measurement termination procedure).

The proxy AP terminates a proxy of the WLAN sensing measurement between the proxy AP and the sensing responder 1 (i.e., STA1) to the sensing responder n (i.e., the STAn). If the requesting STA participates in the WLAN sensing measurement, after step 2, the requesting STA may terminate the WLAN sensing measurement by itself.

In the embodiments of the present disclosure, sensing measurement identification information of a wireless local area network (WLAN) sensing measurement is determined, where the sensing measurement identification information includes a sensing session identification and/or a sensing measurement establishment identification; and, a proxy of a WLAN sensing measurement corresponding to the sensing measurement identification information is terminated. Through initiating a WLAN sensing measurement by a proxy sensing initiator and terminating the proxy, one-to-multi communication between the initiator and the responder can be implemented when the STA serves as the initiator. Embodiments of the present disclosure provide a manner for terminating proxy in the process that an AP initiates a sensing measurement as a proxy for a STA.

As shown in FIG. 9, according to an embodiment of the present invention , there is provided a method for terminating a proxy of WLAN sensing. Optionally, the method may be applied to a station (STA), and the method includes the following steps.

In step 901, a first termination request carrying with sensing measurement identification information is sent to a proxy access point (AP), to instruct the proxy AP to terminate a proxy of a WLAN sensing measurement corresponding to the sensing measurement identification information, where the sensing measurement identification information includes a sensing session identification and/or a sensing measurement establishment identification.

Referring to the foregoing case 1, the STA station sends a first termination request carrying with sensing measurement identification information to the AP, the first termination request may include a termination of proxy message frame, and the first termination request is used to instruct the proxy AP to terminate a proxy of the WLAN sensing measurement corresponding to the sensing measurement identification information. Among them, the sensing measurement identification information includes a sensing session identification and/or a sensing measurement establishment identification. The sensing session identification is used to identify a sensing session corresponding to the WLAN sensing measurement, and the sensing measurement establishment identification is used to identify a sensing session establishment initiation message frame.

After determining the sensing session identification and/or the sensing measurement establishment identification, the AP terminates a proxy of the WLAN sensing measurement corresponding to the sensing session identification, or the WLAN sensing measurement corresponding to the sensing measurement establishment identification.

In an optional embodiment, the STA includes at least one of a first STA or a second STA.

The first STA includes a sensing initiator that initiates the WLAN sensing measurement;

The second STA includes a sensing responder that participates in the WLAN sensing measurement.

The first STA includes a sensing initiator that initiates a proxy of the WLAN sensing measurement. For example, the sensing initiator is a requesting STA. After receiving the measurement report sent by the sensing proxy (a proxy AP), the requesting STA may send a first termination request, and the first termination request may include a termination of proxy message frame.

It should be noted that, in the embodiments of the present invention , the first STA may also participate in the WLAN sensing measurement as a responder. Therefore, the second STA mentioned in the embodiments of the present disclosure does not include the requesting STA; that is, the second STA is a sensing responder other than the requesting STA.

The second STA includes a sensing responder that participates in the WLAN sensing measurement, and the sensing responder includes a STA that participates in the sensing measurement (a non-requesting STA).

In an optional embodiment, in the case that the STA includes the first STA, after sending the first termination request carrying with the sensing measurement identification information to the proxy access point (AP), the method includes the case 5 and the case 6.

**In** case 5, if the first STA participates in the WLAN sensing measurement, a first termination response sent by the proxy AP is received, and the WLAN sensing measurement corresponding to the sensing measurement identification information is terminated.

Referring to the foregoing second example, and referring to FIG. 5, the first STA (i.e., the requesting STA) participates in the WLAN sensing measurement, and the following steps are mainly included.

**In** step 1, the requesting STA sends a first termination request (an initial termination request).

After receiving the measurement report sent by the sensing proxy (a proxy AP), the requesting STA sends a first termination request to the proxy AP. In the first termination request, a sensing measurement process corresponding to the sensing measurement setup **ID** carried in the measurement report frame or a sensing session requested to be terminated is identified. The sensing session may include one or more sensing measurement processes; that is, all proxies of sensing measurement established with the AP are terminated.

**In** step 2, the proxy AP sends a first termination response (an initial sensing termination response).

**In** the first termination response, a specific sensing measurement process or a sensing session to be terminated is identified.

Since the requesting STA participates in the WLAN sensing measurement, the requesting STA may terminate the WLAN sensing measurement by itself after receiving the first termination response, and the proxy AP does not need to terminate the sensing measurement again with it.

**In** step 3, the proxy AP terminates the WLAN sensing measurement (a sensing measurement termination procedure).

The proxy AP terminates a proxy of the WLAN sensing measurement between the proxy AP and the sensing responder 1 (i.e., STA1) to the sensing responder n (i.e., STAn), which includes terminating the sensing measurement process corresponding to the measurement setup **ID** and/ or the sensing session **ID** in the initial termination request or the initial sensing termination response frame.

**In** case 6, if the first STA does not participate in the WLAN sensing measurement, an acknowledgement (ACK) message sent by the proxy AP is received, a WLAN sensing measurement corresponding to the sensing measurement identification information is terminated, and a first termination response sent by the proxy AP is received.

Referring to the foregoing third example, and referring to FIG. 6, FIG. 6 shows a scenario in which the first STA (the requesting STA) does not participate in the WLAN sensing measurement, and the following steps are mainly included.

**In** step 1, the requesting STA sends a first termination request (an initial termination request).

After receiving the measurement report sent by the sensing proxy (a proxy AP), the requesting STA sends a first termination request to the proxy AP. **In** the first termination request, the sensing session requested to be terminated is identified. In the first termination request, a sensing measurement process corresponding to sensing measurement setup ID carried in the measurement report frame or a sensing session requested to be terminated is identified. The sensing session may include one or more sensing measurement processes; that is, all proxies of sensing measurement established with the AP are terminated.

In step 2, the proxy AP sends an acknowledgement message (an ACK message).

In step 3, the proxy AP terminates the WLAN sensing measurement (a sensing measurement termination procedure).

The proxy AP terminates a proxy of the WLAN sensing measurement between the proxy AP and the sensing responder 1 (i.e., STA1) to the sensing responder n (i.e., STAn).

In step 4, the proxy AP sends a first termination response (an initial termination response).

In the first termination response, it is identified that the proxy AP has terminated the WLAN sensing measurement between the proxy AP and the sensing responder 1 (i.e., STA1) to the sensing responder 1 (i.e., STAn), which includes terminating the sensing measurement process corresponding to the measurement setup ID and/ or the sensing session ID in the initial termination request or the initial sensing termination response frame.

In an optional embodiment, in the case that the STA includes the second STA (a non-requesting STA), after sending the first termination request carrying with the sensing measurement identification information to the proxy access point (AP), the method includes:

receiving a third termination response sent by the proxy AP, and terminating the WLAN sensing measurement corresponding to the sensing measurement identification information.

Among them, with reference to the foregoing fourth example, the STA sends a first termination request to the first STA to identify a sensing session requested to be terminated. After receiving the first termination request, the proxy AP sends a second termination request to the first STA, and receives a second termination response fed back by the first STA for the second termination request. The proxy AP feeds a third termination response back to the second STA, and terminates a proxy of the WLAN sensing measurement corresponding to the sensing measurement identification information.

Specifically, referring to FIG. 7, the second STA includes STA1, and the following steps are mainly included.

In step 1, STA1 sends a first termination request (an initial termination request).

The STA1 sends a first termination request to the proxy AP. In the first termination request, a sensing session requested to be terminated is identified. In the first termination request, a sensing session requested or a sensing measurement process corresponding to sensing measurement setup ID carried in the measurement report frame, which is to be terminated, is identified. The sensing session may include one or more sensing measurement processes; that is, all proxies of the sensing measurement established with the AP are terminated.

In step 2, the proxy AP sends a second termination request to the requesting STA. In the second termination request, the sensing measurement process corresponding to the sensing measurement setup ID carried in the measurement report frame or the sensing session requested to be terminated is identified.

In step 3, the requesting STA sends a second termination response (a termination response) to the proxy AP.

In step 4, the proxy AP sends a third termination response (a termination response) to the STA1.

In step 5, the proxy AP terminates the WLAN sensing measurement (a sensing measurement termination procedure).

The proxy AP terminates a proxy of the WLAN sensing measurement between the proxy AP and the sensing responder 1 (i.e., STA1) to the sensing responder n (i.e., the STAn).

In the embodiments of the present disclosure, the first termination request carrying with the sensing measurement identification information is sent to the proxy access point (AP) to instruct the proxy AP to terminate a proxy of the WLAN sensing measurement corresponding to the sensing measurement identification information. Through terminating the WLAN sensing measurement by the AP as a proxy for the sensing initiator, one-to-multi communication between the initiator and the responder can be implemented when the STA serves as the initiator. Embodiments of the present disclosure provide a manner for terminating proxy in the process that an AP initiates a sensing measurement as a proxy for a STA.

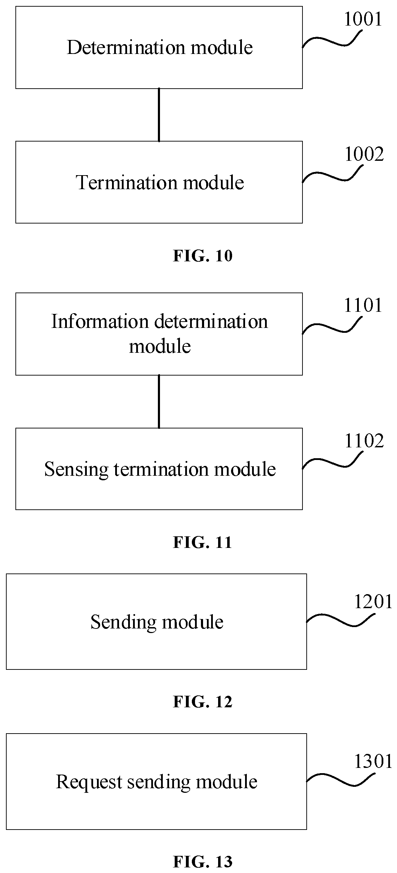

Based on the same principle as that of the method provided in the embodiments of the present invention , according to an embodiment of the present invention , there is further provided a proxy access point (AP). As shown in FIG. 10, the access point includes a determination module 1001 and a termination module 1002.

The determination module 1001 is configured to determine sensing measurement identification information of a wireless local area network (WLAN) sensing measurement, where the sensing measurement identification information includes a sensing session identification and/or a sensing measurement establishment identification.

In the WLAN sensing process, in order to implement one-to-multi communication between the initiator and the responder when the STA serves as the initiator, the AP performs WLAN sensing measurement as a proxy for the sensing initiator (for example, the STA). When the WLAN sensing needs to be terminated (or stopped), the AP determines the sensing measurement identification information of the WLAN sensing measurement, so as to determine to terminate a proxy of the WLAN sensing measurement. Among them, the sensing measurement identification information includes a sensing session identification and/or a sensing measurement establishment identification; the sensing session identification is used to identify a sensing session corresponding to the WLAN sensing measurement; and, the sensing measurement establishment identification is used to identify a sensing session establishment initiation message frame.

Optionally, the sensing measurement identification information may be from the STA, or may be obtained by negotiation between the AP and the sensing initiator (the requesting STA) in the process of establishing a proxy of the sensing measurement, or may be obtained by negotiation between the AP and the sensing responder (the STA participating in the sensing measurement) in the process of establishing the sensing measurement. That is, both the initiator and the responder of the WLAN sensing measurement can initiate measurement termination.

The termination module 1002 is configured to terminate a proxy of a WLAN sensing measurement corresponding to the sensing measurement identification information.

After determining the sensing session identification and/or the sensing measurement establishment identification, the WLAN sensing measurement corresponding to the sensing session identification is terminated, or the WLAN sensing measurement corresponding to the sensing measurement establishment identification is terminated. In this way, in the WLAN sensing process, in the case that the sensing initiator is a STA, the AP performs the sensing measurement as a proxy for the sensing initiator, and terminates the WLAN sensing measurement according to the sensing measurement identification information, so as to implement one-to-multi communication, and reduce frequency spectrum resource waste and latency caused by WLAN sensing performed by the STA as an initiator.

Optionally, in the embodiments of the present disclosure, the determination module 1001 includes:
an obtaining sub-module, configured to receive a first termination request sent by a station (STA), and obtain sensing measurement identification information carried in the first termination request;
   and/or
a determining sub-module, configured to determine sensing measurement identification information of the WLAN sensing measurement after sending a measurement report of the WLAN sensing measurement.

Optionally, in the embodiments of the present disclosure, the STA includes at least one of a first STA or a second STA.

The first STA includes a sensing initiator that initiates the proxy of the WLAN sensing measurement.

The second STA includes a sensing responder that participates in the WLAN sensing measurement.

Optionally, in the embodiments of the present invention , the termination module 1002 includes:
a first termination sub-module, configured to: in a case that the STA includes the first STA, if the first STA participates in the WLAN sensing measurement, send a first termination response to the first STA, and terminate a proxy of a WLAN sensing measurement corresponding to the sensing measurement identification information; and
a second termination sub-module, configured to: in a case that the STA includes the first STA, if the first STA does not participate in the WLAN sensing measurement, send an acknowledgement (ACK) message to the first STA, terminate a proxy of a WLAN sensing measurement corresponding to the sensing measurement identification information, and send a first termination response to the first STA.

Optionally, in the embodiments of the present invention , the termination module 1002 includes:
a receiving sub-module, configured to: in a case that the STA includes the second STA, send a second termination request to the first STA, and receive a second termination response sent by the first STA; and
a third termination sub-module, configured to send a third termination response to the second STA, and terminate a proxy of the WLAN sensing measurement corresponding to the sensing measurement identification information.

Optionally, in the embodiments of the present invention , the access point further includes:
a receiving module, configured to: after determining the sensing measurement identification information of the WLAN sensing measurement by the determination module 1001,
send a third termination request to the first STA, and receive a fourth termination response or an ACK message sent by the first STA.

**In** the embodiments of the present invention , the determination module 1001 determines sensing measurement identification information of a wireless local area network (WLAN) sensing measurement, where the sensing measurement identification information includes a sensing session identification and/or a sensing measurement establishment identification; the terminating module 1002 terminates a proxy of the WLAN sensing measurement corresponding to the sensing measurement identification information. Through initiating a WLAN sensing measurement by a proxy sensing initiator and terminating the proxy, one-to-multi communication between the initiator and the responder can be implemented when the STA serves as an initiator.

Referring to FIG. 11, according to an embodiment of the present invention , there is further provided an apparatus for terminating a proxy of WLAN sensing, applied to a proxy access point (AP), and the apparatus includes:
an information determination module 1101, configured to determine sensing measurement identification information of a wireless local area network (WLAN) sensing measurement, where the sensing measurement identification information includes a sensing session identification and/or a sensing measurement establishment identification;
a sensing termination module 1102, configured to terminate a proxy of the WLAN sensing measurement corresponding to the sensing measurement identification information.

The apparatus for terminating a proxy of WLAN sensing further includes other modules of the access point in the foregoing embodiments, and performs other functions of the access point in the foregoing embodiments, and details are not described here again.

Referring to FIG. 12, according to an embodiment of the present disclosure, there is further provided a station (STA), and the station includes:
a sending module 1201, configured to send a first termination request carrying with sensing measurement identification information to a proxy access point (AP), to instruct the proxy AP to terminate a proxy of a WLAN sensing measurement corresponding to the sensing measurement identification information.

The sensing measurement identification information includes a sensing session identification and/or a sensing measurement establishment identification.

Referring to the foregoing case 1, the station (STA) sends a first termination request carrying with sensing measurement identification information to the AP. The first termination request may include a termination proxy of message frame, and the first termination request is used to instruct the proxy AP to terminate a proxy of the WLAN sensing measurement corresponding to the sensing measurement identification information. Among them, the sensing measurement identification information includes a sensing session identification and/or a sensing measurement establishment identification; the sensing session identification is used to identify a sensing session corresponding to the WLAN sensing measurement; and, the sensing measurement establishment identification is used to identify a sensing session establishment initiation message frame.

After determining the sensing session identification and/or the sensing measurement establishment identification, the AP terminates the WLAN sensing measurement corresponding to the sensing session identification, or the WLAN sensing measurement corresponding to the sensing measurement establishment identification.

Optionally, in the embodiments of the present invention , the STA includes at least one of a first STA or a second STA.

The first STA includes a sensing initiator that initiates the WLAN sensing measurement.

The second STA includes a sensing responder that participates in the WLAN sensing measurement.

Optionally, in the embodiments of the present invention , the station includes a first receiving module and a second receiving module.

The first receiving module is configured to: in a case that the STA includes the first STA, after sending a first termination request carrying with sensing measurement identification information to the proxy access point (AP) by the sending module 1201,
if the first STA participates in the WLAN sensing measurement, receive a first termination response sent by the proxy AP, and terminate the WLAN sensing measurement corresponding to the sensing measurement identification information.

The second receiving module is configured to: if the first STA does not participate in the WLAN sensing measurement, receive an acknowledge (ACK) message sent by the proxy AP, terminate the WLAN sensing measurement corresponding to the sensing measurement identification information, and receive a first termination response sent by the proxy AP.

Optionally, in the embodiments of the present invention , the station includes:
a response receiving module, configured to: in a case that the STA includes the second STA, after sending a first termination request carrying with the sensing measurement identification information to the proxy access point (AP) by the sending module 1201,
receive a third termination response sent by the proxy AP, and terminate the WLAN sensing measurement corresponding to the sensing measurement identification information.

In the embodiments of the present invention , the sending module 1201 sends the first termination request carrying with the sensing measurement identification information to the proxy access point (AP) to instruct the proxy AP to terminate a proxy of the WLAN sensing measurement corresponding to the sensing measurement identification information. Through terminating a WLAN sensing measurement by the AP as a proxy for the sensing initiator, one-to-multi communication between the initiator and the responder can be implemented when the STA serves as an initiator.

Based on the same principle as that of the station provided in the embodiments of the present invention , according to an embodiment of the present disclosure, there is further provided an apparatus for terminating a proxy of WLAN sensing, applied to a station (STA). As shown in FIG. 13, the apparatus includes:
a request sending module 1301, configured to send a first termination request carrying with sensing measurement identification information to the proxy access point (AP), to instruct the proxy AP to terminate a proxy of a WLAN sensing measurement corresponding to the sensing measurement identification information.

The sensing measurement identification information includes a sensing session identification and/or a sensing measurement establishment identification.

The apparatus for terminating a proxy of WLAN sensing further includes other modules of the station in the foregoing embodiments, and performs other functions of the sensing initiator in the foregoing embodiments, and details are not described here again.

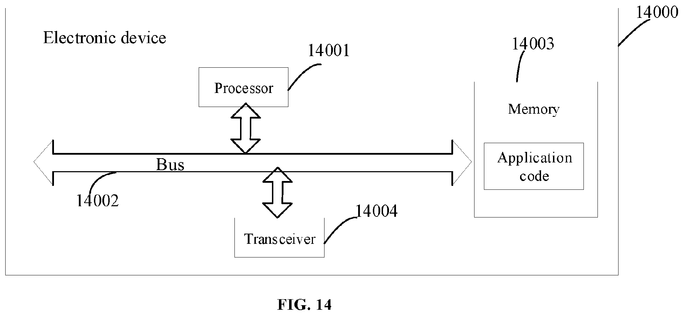

In an optional embodiment, according to an embodiment of the present disclosure, there is further provided an electronic device, as shown in FIG. 14. The electronic device 14000 shown in FIG. 14 may be a server, including a processor 14001 and a memory 14003, where the processor 14001 is connected to the memory 14003, for example, through a bus 14002. Optionally, the electronic device 14000 may further include a transceiver 14004. It should be noted that the number of the transceiver 14004 in actual applications is not limited to one, and the structure of the electronic device 14000 does not constitute a limitation on the embodiments of the present disclosure.

The processor 14001 may be a central processing unit (CPU), a general-purpose processor, a digital signal processor (DSP), an application-specific integrated circuit (ASIC), a field programmable gate array (FPGA), or another programmable logic device, a transistor logic device, a hardware component, or any combination of them. The processor may implement or execute various example logical blocks, modules, and circuits described with reference to content disclosed in the present disclosure. Alternatively, the processor 14001 may be a combination for implementing a computing function, for example, a combination of one or more microprocessors, or a combination of a DSP and a microprocessor.

The bus 14002 may include a path for transmitting information between the foregoing components. The bus 14002 may be a peripheral component interconnect (PCI) bus, an extended industry standard architecture (EISA) bus, or the like. The bus 14002 may be classified into an address bus, a data bus, a control bus, or the like. For ease of representation, only a thick line is used to represent the bus in FIG. 14, but this does not mean that there is only one bus or only one type of bus.

The memory 14003 may be a read only memory (ROM) or another type of static storage device that may store static information and instructions, a random access memory ( RAM) or another type of dynamic storage device that may store information and instructions; the memory 14003 may also be an electrically erasable programmable read only memory (EEPROM), a compact disk read only memory (CD-ROM), or other CD storage, optical disk storage (including compact disk, laser disk, optical disk, digital universal disk, blue-ray disk, etc.), magnetic disk storage medium, or other magnetic storage device, or any other medium that can be used to carry or store desired program code in the form of instructions or data structures and that can be accessed by a computer, which is not limited to this.

The memory 14003 is configured to store application program code for executing the solution of the present disclosure, and the processor 14001 is configured to control the execution. The processor 14001 is configured to execute the application program code stored in the memory 14003, to implement the content shown in the foregoing method embodiments.

Among them, the electronic device includes, but is not limited to, a mobile terminal such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal), or the like, and a fixed terminal such as a digital TV, a desktop computer, or the like. The electronic device shown in FIG. 14 is merely an example, and should not bring any limitation on the function and scope of use of the embodiments of the present disclosure.

The server provided in the present disclosure may be an independent physical server, or may be a server cluster or a distributed system composed of a plurality of physical servers, or may be a cloud server that provides basic cloud computing services such as a cloud service, a cloud database, a cloud computing, a cloud function, cloud storage, a network service, a cloud communication, a middleware service, a domain name service, a security service, a CDN, and a big data and artificial intelligence platform. The terminal may be a smartphone, a tablet computer, a notebook computer, a desktop computer, a smart speaker, a smartwatch, or the like, but is not limited to this. The terminal and the server may be directly or indirectly connected to each other in a wired or wireless communication manner, which is not limited in the present disclosure.

According to an embodiment of the present invention, there is provided a computer-readable storage medium. The computer-readable storage medium stores a computer program, and when the computer program runs on a computer, the computer can perform corresponding content in the foregoing method embodiments.

It should be understood that, although the steps in the flowcharts of the accompanying drawings are sequentially displayed according to the indication of the arrows, the steps are not necessarily performed in sequence according to the order indicated by the arrows. Unless explicitly stated here, the execution of these steps is not strictly limited in order, and may be executed in other orders. Moreover, at least a part of the steps in the flowcharts of the accompanying drawings may include a plurality of sub-steps or a plurality of stages. The sub-steps or sub-stages are not necessarily performed at the same moment, but may be executed at different moments; and the execution order of them is not necessarily performed in sequence, but may be performed in turn or alternately with at least a part of sub-steps or sub-stages of other steps or other steps.

It should be noted that the computer-readable medium according to the present invention may be a computer-readable signal medium or a computer-readable storage medium or any combination of the two. The computer-readable storage medium may be, for example, but not limited to, an electronic, magnetic, optical, electromagnetic, infrared, or semiconductor system, apparatus, or device, or any combination of them. A more specific example of a computer-readable storage medium may include, but is not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be used by or in combination with an instruction execution system, apparatus, or device. In the present disclosure, the computer-readable signal medium may include a data signal propagated in a baseband or as a part of a carrier, and the computer-readable signal medium carries computer-readable program code. The propagated data signal may take various forms, including but not limited to an electromagnetic signal, an optical signal, or any suitable combination of the foregoing. The computer-readable signal medium may also be any computer-readable medium other than a computer-readable storage medium, and the computer-readable signal medium may send, propagate, or transmit a program for use by or in connection with an instruction execution system, apparatus, or device. The program code included on the computer readable medium may be transmitted by using any suitable medium, including but not limited to: an electric wire, an optical cable, a radio frequency (RF), etc., or any suitable combination of the above.

The computer-readable medium may be included in the electronic device, or may exist alone without being assembled into the electronic device.

The computer-readable medium carries one or more programs, and when the one or more programs are executed by the electronic device, the electronic device is enabled to perform the method shown in the foregoing embodiments.

According to an aspect of the present disclosure, there is provided a computer program product or a computer program. The computer program product or the computer program includes computer instructions, and the computer instructions are stored in a computer-readable storage medium. A processor of a computer device reads the computer instructions from the computer-readable storage medium, and the processor executes the computer instructions, so that the computer device performs the method provided in the foregoing optional implementations.

Computer program code for performing the operations of the present disclosure may be written in one or more programming languages or their combinations. The programming languages include object-oriented programming languages, such as Java, Smalltalk, C + +, and conventional procedural programming languages, such as the "C" language or similar programming languages. The program code may be executed entirely on the user's computer, partly on the user's computer, as a stand-alone software package, partly on the user's computer and partly on a remote computer, or entirely on the remote computer or server. **In** the case of a remote computer, the remote computer may be connected to the user's computer through any type of network, including a local area network (LAN) or a wide area network (WAN), or may be connected to an external computer (for example, to be connected via the Internet using an Internet service provider).

The flowchart and block diagrams in the drawings illustrate the architecture, function, and operation of possible implementations of systems, methods, and computer program products according to various embodiments of the present disclosure. **In** this regard, each block in the flowchart or block diagrams may represent a module, a program segment, or a portion of code, which includes one or more executable instructions for implementing the specified logical function. It should also be noted that, in some alternative implementations, the functions noted in the blocks may occur in a different order from the order noted in the drawings. For example, two blocks shown in succession may, in fact, be executed substantially concurrently, or may sometimes be executed in a reverse order, depending upon the functions involved. **It** will also be noted that each block in the block diagrams and/or the flowchart, and combinations of blocks in the block diagrams and/or the flowchart, can be implemented by dedicated hardware-based systems that perform the specified functions or operations, or by combinations of dedicated hardware and computer instructions.

The modules involved in the embodiments of the present disclosure may be implemented by software, or may be implemented by hardware. Among them, the name of the module does not constitute a limitation on the module itself in some cases; for example, the module A may also be described as "a module A for performing an operation B".

## Claims

1. A method for terminating a proxy of wireless local area network, WLAN, sensing, performed by a proxy access point, AP, and comprising:
determining (101) sensing measurement identification information of a WLAN sensing measurement, wherein the sensing measurement identification information comprises at least one of: a sensing session identification or a sensing measurement establishment identification; and
terminating (102) a proxy of the WLAN sensing measurement corresponding to the sensing measurement identification information; wherein the proxy AP is configured to, when a station (STA) serves as an initiator to perform one-to-multi communication with a responder, perform WLAN sensing measurement as a proxy for the STA;
wherein determining (101) the sensing measurement identification information of the WLAN sensing measurement comprises:
receiving a first termination request sent by the station, STA, and obtaining the sensing measurement identification information carried in the first termination request.

2. The method according to claim 1, wherein the STA comprises at least one of a first STA or a second STA;
the first STA comprises a sensing initiator that initiates the proxy of the WLAN sensing measurement; and
the second STA comprises a sensing responder that participates in the WLAN sensing measurement.

3. The method according to claim 2, wherein the STA comprises the first STA, the first STA participates in the WLAN sensing measurement, and terminating the proxy of the WLAN sensing measurement corresponding to the sensing measurement identification information comprises:
sending a first termination response to the first STA, and terminating the proxy of the WLAN sensing measurement corresponding to the sensing measurement identification information.

4. The method according to claim 2, wherein the STA comprises the first STA, the first STA does not participate in the WLAN sensing measurement, and terminating the proxy of the WLAN sensing measurement corresponding to the sensing measurement identification information comprises:
sending an acknowledgement, ACK, message to the first STA, terminating the proxy of the WLAN sensing measurement corresponding to the sensing measurement identification information, and sending a first termination response to the first STA.

5. The method according to claim 2, wherein the STA comprises the second STA, and terminating the proxy of the WLAN sensing measurement corresponding to the sensing measurement identification information comprises:
sending a second termination request to the first STA, and receiving a second termination response sent by the first STA; and
sending a third termination response to the second STA, and terminating the proxy of the WLAN sensing measurement corresponding to the sensing measurement identification information.

6. The method according to claim 2, further comprising:
sending a third termination request to the first STA, and receiving a fourth termination response or an ACK message sent by the first STA.

7. A method for terminating a proxy of wireless local area network, WLAN, sensing, performed by a station, STA, and comprising:
sending (901) a first termination request carrying sensing measurement identification information to a proxy access point, AP, to instruct the proxy AP to terminate a proxy of a WLAN sensing measurement corresponding to the sensing measurement identification information, wherein the sensing measurement identification information comprises at least one of: a sensing session identification or a sensing measurement establishment identification; wherein the proxy AP is configured to, when the STA serves as an initiator to perform one-to-multi communication with a responder, perform WLAN sensing measurement as a proxy for the STA.

8. The method according to claim 7, wherein the STA comprises at least one of a first STA or a second STA;
the first STA comprises a sensing initiator that initiates the WLAN sensing measurement; and
the second STA comprises a sensing responder that participates in the WLAN sensing measurement.

9. The method according to claim 8, wherein the STA comprises the first STA, the first STA participates in the WLAN sensing measurement, and the method further comprises:
receiving a first termination response sent by the proxy AP, and terminating the WLAN sensing measurement corresponding to the sensing measurement identification information.

10. The method according to claim 8, wherein the STA comprises the first STA, the first STA does not participate in the WLAN sensing measurement, and the method further comprises:
receiving an acknowledgement, ACK, message sent by the proxy AP, terminating the WLAN sensing measurement corresponding to the sensing measurement identification information, and receiving a first termination response sent by the proxy AP.

11. The method according to claim 8, wherein the STA comprises the second STA, and the method further comprises:
receiving a third termination response sent by the proxy AP, and terminating the WLAN sensing measurement corresponding to the sensing measurement identification information.

12. An apparatus for terminating a proxy of wireless local area network, WLAN, sensing, applied to a proxy access point, AP, and comprising:
an information determination module (1101), configured to determine sensing measurement identification information of a WLAN sensing measurement, wherein the sensing measurement identification information comprises at least one of: a sensing session identification or a sensing measurement establishment identification; and
a sensing termination module (1102), configured to terminate a proxy of the WLAN sensing measurement corresponding to the sensing measurement identification information; wherein the proxy AP is configured to, when a station (STA) serves as an initiator to perform one-to-multi communication with a responder, perform WLAN sensing measurement as a proxy for the STA;
wherein the information determination module (1101) is further configured to receive a first termination request sent by **the** station, STA, and obtain the sensing measurement identification information carried in the first termination request.

13. An apparatus for terminating a proxy of wireless local area network, WLAN, sensing, applied to a station, STA, and comprising:
a request sending module (1301), configured to send a first termination request carrying sensing measurement identification information to a proxy access point, AP, to instruct the proxy AP to terminate a proxy of a WLAN sensing measurement corresponding to the sensing measurement identification information;
wherein the sensing measurement identification information comprises a sensing session identification and/or a sensing measurement establishment identification; and, the proxy AP is configured to, when the STA serves as an initiator to perform one-to-multi communication with a responder, perform WLAN sensing measurement as a proxy for the STA.

14. A computer-readable storage medium, wherein the computer-readable storage medium stores a computer program, and when the computer program is executed by a processor, the method according to any one of claims 1 to 11 is implemented.

## Patentansprüche

1. Verfahren zum Beenden einer von einem Proxy-Zugangspunkt (AP) durchgeführten Erfassung eines Proxys eines drahtlosen lokalen Netzwerks (WLAN), das Folgendes umfasst:
Ermitteln (101) von Identifikationsinformationen einer WLAN-Erfassungsmessung, wobei die Identifikationsinformationen der Erfassungsmessung mindestens eines der folgenden Elemente umfassen: eine Erfassungssitzungs-Identifikation oder eine Identifikation zum Aufbau einer Erfassungsmessung; und
Beenden (102) eines Proxys der WLAN-Erfassungsmessung entsprechend den Identifikationsinformationen der Erfassungsmessung; wobei der Proxy-AP dazu konfiguriert ist, dass er, wenn eine Station (STA) als Initiator fungiert, um eine Eins-zu-Viele-Kommunikation mit einem Responder durchzuführen, die WLAN-Erfassungsmessung als Proxy für die STA durchführt;
wobei das Ermitteln (101) von Identifikationsinformationen der WLAN-Erfassungsmessung Folgendes umfasst:
Empfangen einer ersten Beendigungsanforderung, die von der Station (STA) gesendet wurde, und Erhalt der in der ersten Beendigungsanforderung enthaltenen Identifikationsinformationen der Erfassungsmessung.

2. Verfahren gemäß Anspruch 1, wobei die STA mindestens eine einer ersten STA oder einer zweiten STA umfasst;
die erste STA einen Erfassungsinitiator umfasst, der die Durchführung der WLAN-Erfassungsmessung initiiert; und
die zweite STA einen Abtast-Responder umfasst, der in der WLAN-Abtastmessung teilnimmt.

3. Verfahren gemäß Anspruch 2, wobei die STA die erste STA umfasst, die erste STA an der WLAN-Erfassungsmessung teilnimmt und das Beenden des Proxys der WLAN-Erfassungsmessung, die der Erfassungsmessungs-Identifikationsinformation entspricht, Folgendes umfasst:
das Senden einer ersten Beendigungsantwort an die erste STA und das Beenden der Proxy-Funktion der WLAN-Erfassungsmessung, die der Erfassungsmessungs-Identifikationsinformation entspricht.

4. Verfahren gemäß Anspruch 2, wobei die STAdie erste STAumfasst, die erste STAnicht an der WLAN-Erfassungsmessung teilnimmt und das Beenden der Proxy-Funktion der WLAN-Erfassungsmessung, die der Erfassungsmessungs-Identifikationsinformation entspricht, umfasst:
Senden einer Bestätigungsnachricht (ACK) an die erste STA, Beenden des Proxys der WLAN-Erfassungsmessung, der den Erfassungsmessungs-Identifikationsinformationen entspricht, und Senden einer ersten Beendigungsantwort an die erste STA.

5. Verfahren gemäß Anspruch 2, wobei die STA die zweite STA umfasst und das Beenden der Proxy-Funktion der WLAN-Erfassungsmessung, die der Erfassungsmessungs-Identifikationsinformation entspricht, umfasst:
Senden einer zweiten Beendigungsanforderung an die erste STA und Empfangen einer von der ersten STA gesendeten zweiten Beendigungsantwort; und
Senden einer dritten Beendigungsantwort an die zweite STA und Beenden der Proxy-Funktion der WLAN-Erfassungsmessung, die der Erfassungsmessungs-Identifikationsinformation entspricht.

6. Verfahren gemäß Anspruch 2, das ferner umfasst:
das Senden einer dritten Beendigungsanforderung an die erste STA und das Empfangen einer vierten Beendigungsantwort oder einer von der ersten STA gesendeten ACK-Nachricht.

7. Verfahren zum Beenden einer Proxy-Funktion für eine von einer Station (STA) durchgeführte WLAN-Erfassung, umfassend:
Senden (901) einer ersten Beendigungsanforderung, die Identifikationsinformationen für eine Erfassungsmessung enthält, an einen Proxy-Zugangspunkt, AP, um den Proxy-AP anzuweisen, eine Proxy-Funktion für eine WLAN-Erfassungsmessung entsprechend den Identifikationsinformationen der Erfassungsmessung zu beenden, wobei die Identifikationsinformationen der Erfassungsmessung mindestens eines der folgenden Elemente umfassen: eine Erfassungssitzungs-Identifikation oder eine Identifikation zum Aufbau der Erfassungsmessung; wobei der Proxy-AP dazu konfiguriert ist, dass er, wenn die STA als Initiator fungiert, um eine Eins-zu-Viele-Kommunikation mit einem Responder durchzuführen, eine WLAN-Erfassungsmessung als Proxy für die STA durchführt .

8. Verfahren gemäß Anspruch 7, wobei die STA mindestens entweder eine erste STAoder eine zweite STA umfasst;
die erste STA einen Erfassungsinitiator umfasst, der die WLAN-Erfassungsmessung initiiert; und
die zweite STA einen Erfassungs-Responder umfasst, der an der WLAN-Erfassungsmessung teilnimmt.

9. Verfahren gemäß Anspruch 8, wobei die STA die erste STA umfasst, die erste STA an der WLAN-Erfassungsmessung teilnimmt, und das Verfahren ferner umfasst:
das Empfangen einer ersten Beendigungsantwort, die vom Proxy-AP gesendet wird, und das Beenden der WLAN-Erfassungsmessung entsprechend den Erfassungsmessungs-Identifikationsinformationen.

10. Verfahren gemäß Anspruch 8, wobei die STA die erste STA umfasst, die erste STA nicht in der WLAN-Erfassungsmessung teilnimmt und das Verfahren ferner umfasst:
Empfangen einer vom Proxy-AP gesendeten Bestätigungsnachricht (ACK), Beenden der WLAN-Erfassungsmessung entsprechend der Erfassungsmessungs-Identifikationsinformation und Empfangen einer ersten Beendigungsantwort, die vom Proxy-AP gesendet wurde.

11. Verfahren gemäß Anspruch 8, wobei die STA die zweite STA umfasst und das Verfahren ferner umfasst:
Empfangen einer vom Proxy-AP gesendeten dritten Beendigungsantwort und Beenden der WLAN-Erfassungsmessung, die der Erfassungsmessungs-Identifikationsinformation entspricht.

12. Vorrichtung zum Beenden einer Erfassung eines Proxy eines drahtlosen lokalen Netzwerks (WLAN), die auf einen Proxy-Zugangspunkt (AP) angewendet wird und Folgendes umfasst:
ein Informationsermittlungsmodul (1101), das dazu konfiguriert ist, Erfassungsmessungs-Identifikationsinformationen einer WLAN-Erfassungsmessung zu ermitteln, wobei die Erfassungsmessungs-Identifikationsinformationen mindestens eines der folgenden Elemente umfassen: eine Erfassungssitzungs-Identifikation oder eine Erfassungsmessungs-Einrichtungs-Identifikation; und
ein Erfassungsbeendigungsmodul (1102), das dazu konfiguriert ist, einen Proxy der WLAN-Erfassungsmessung entsprechend den Erfassungsmessungs-Identifikationsinformationen zu beenden; wobei der Proxy-AP dazu konfiguriert ist, dass er, wenn eine Station (STA) als Initiator fungiert, um eine Eins-zu-Viele-Kommunikation mit einem Responder durchzuführen, die WLAN-Erfassungsmessung als Proxy für die STA durchführt;
wobei das Informationsermittlungsmodul (1101) ferner dazu konfiguriert ist, eine von der Station (STA) gesendete erste Beendigungsanforderung zu empfangen und die in der ersten Beendigungsanforderung enthaltenen Identifikationsinformationen der Erfassungsmessung zu ermitteln bzw. zu erhalten.

13. Vorrichtung zum Beenden einer Proxy-Erfassung in einem drahtlosen lokalen Netzwerk (WLAN), die auf eine Station (STA) angewendet wird und umfasst:
ein Anforderungssendemodul (1301), das dazu konfiguriert ist, eine erste Beendigungsanforderung, die Identifikationsinformationen der Erfassungsmessung enthält, an einen Proxy-Zugangspunkt (AP) zu senden, um den Proxy-AP anzuweisen, einen Proxy einer WLAN-Erfassungsmessung entsprechend den Identifikationsinformationen der Erfassungsmessung zu beenden;
wobei die Identifikationsinformationen für die Erfassungsmessung eine Erfassungssitzungs-Identifikation und/oder eine Identifikation zur Einrichtung der Erfassungsmessung umfassen; und wobei der Proxy-AP dazu konfiguriert ist, dass er, wenn die STA als Initiator fungiert, um eine Eins-zu-Viele-Kommunikation mit einem Responder durchzuführen, die WLAN-Erfassungsmessung als Proxy für die STA durchführt.

14. Ein computerlesbares Speichermedium, wobei das computerlesbare Speichermedium ein Computerprogramm speichert und bei Ausführung des Computerprogramms durch einen Prozessor das Verfahren gemäß einem der Ansprüche 1 bis 11 implementiert wird.

## Revendications

1. Procédé permettant de mettre fin à un proxy de réseau local sans fil (WLAN) de détection, effectué par un point d'accès proxy (AP), et comprenant:
la détermination (101) d'informations d'identification de mesure de détection d'une mesure de détection du WLAN, dans lequel lesdites informations d'identification de mesure de détection comprennent au moins l'un des éléments suivants: une identification de session de détection ou une identification d'établissement de mesure de détection ; et
la résiliation (102) d'un proxy de la mesure de détection WLAN correspondant aux informations d'identification de la mesure de détection; dans lequel le point d'accès proxy est configuré pour, lorsqu'une station (STA) sert d'initiateur afin d'effectuer une communication un-à-plusieurs avec un répondeur, effectuer une mesure de détection WLAN en tant que proxy pour la STA ;
dans lequel la détermination (101) des informations d'identification de la mesure de détection du réseau WLAN comprend:
le fait de recevoir une première requête de terminaison envoyée par la station STA, et l'obtention des informations d'identification de la mesure de détection transportées dans la première requête de terminaison.

2. Procédé selon la revendication 1, dans lequel la STA comprend au moins l'une d'une première STA et d'une deuxième STA;
la première STA comprend un initiateur de détection qui lance la mesure de détection du réseau WLAN; et
la deuxième STA comprend un répondeur de détection qui participe à la mesure de détection du réseau WLAN.

3. Procédé selon la revendication 2, dans lequel le STA comprend le premier STA, le premier STA participe à la mesure de détection du réseau WLAN, et la résiliation du proxy de la mesure de détection du réseau WLAN correspondant aux informations d'identification de la mesure de détection comprend:
l'envoi d'une première réponse de terminaison au premier STA, et la terminaison du proxy de la mesure de détection du réseau WLAN correspondant aux informations d'identification de la mesure de détection.

4. Procédé selon la revendication 2, dans lequel la STA comprend la première STA, la première STA ne participe pas à la mesure de détection du réseau WLAN, et la résiliation de la proxy de la mesure de détection du réseau WLAN correspondant aux informations d'identification de la mesure de détection comprend:
l'envoi d'un message d'accusé de réception, ACK, au premier STA, la résiliation du proxy de la mesure de détection du réseau WLAN correspondant aux informations d'identification de la mesure de détection, et l'envoi d'une première réponse de résiliation au premier STA.

5. Procédé selon la revendication 2, dans lequel la STA comprend la deuxième STA, et la résiliation de la proxy de la mesure de détection du réseau WLAN correspondant aux informations d'identification de la mesure de détection comprend:
l'envoi d'une deuxième requête de résiliation au premier STA, et le reçu d'une deuxième réponse de résiliation envoyée par le premier STA; et
l'envoi d'une troisième réponse de terminaison au deuxième STA, et la terminaison du proxy de la mesure de détection du réseau WLAN correspondant aux informations d'identification de la mesure de détection.

6. Procédé selon la revendication 2, comprenant en outre:
l'envoi d'une troisième requête de terminaison à la première STA, et la réception d'une quatrième réponse de terminaison ou d'un message ACK envoyé par la première STA.

7. Procédé de résiliation d'un proxy de détection de réseau local sans fil (WLAN) effectué par une station (STA), comprenant:
l'envoi (901) d'une première requête de résiliation contenant des informations d'identification de mesure de détection à un point d'accès proxy, AP, afin d'ordonner au point d'accès proxy de mettre fin à une mesure de détection WLAN effectuée par procuration correspondant aux informations d'identification de la mesure de détection, dans lequel les informations d'identification de la mesure de détection comprennent au moins l'un des éléments suivants : une identification de session de détection ou une identification d'établissement de mesure de détection ; dans lequel le point d'accès proxy est configuré pour, lorsque la STA sert d'initiateur afin d'effectuer une communication un-à-plusieurs avec un répondeur, effectuer une mesure de détection WLAN par procuration pour la STA.

8. Procédé selon la revendication 7, dans lequel la STA comprend au moins l'une d'une première STA et d'une deuxième STA;
le premier STA comprend un initiateur de détection qui lance la mesure de détection du réseau WLAN; et
le deuxième STA comprend un répondeur de détection qui participe à la mesure de détection du réseau WLAN.

9. Procédé selon la revendication 8, dans lequel la STA comprend la première STA, la première STA participe à la mesure de détection du réseau WLAN, et le procédé comprend en outre:
le reçu d'une première réponse de terminaison envoyée par le point d'accès proxy, et la terminaison de la mesure de détection du réseau WLAN correspondant aux informations d'identification de la mesure de détection.

10. Procédé selon la revendication 8, dans lequel la STA comprend la première STA, la première STA ne participe pas à la mesure de détection du réseau WLAN, et le procédé comprend en outre :
le reçu d'un message d'accusé de réception, ACK, reçu par le point d'accès proxy, la terminaison de la mesure de détection du réseau WLAN correspondant aux informations d'identification de la mesure de détection, et la réception d'une première réponse de terminaison reçue par le point d'accès proxy.

11. Procédé selon la revendication 8, dans lequel la STA comprend la deuxième STA, et le procédé comprend en outre:
recevoir une troisième réponse de fin envoyée par le point d'accès proxy, et mettre fin à la mesure de détection du réseau local sans fil correspondant aux informations d'identification de la mesure de détection.

12. Dispositif destiné à mettre fin à une détection par proxy d'un réseau local sans fil (WLAN), appliqué à un point d'accès proxy (AP), et comprenant:
un module de détermination d'informations (1101), configuré pour déterminer des informations d'identification de mesure de détection d'une mesure de détection WLAN, dans lequel les informations d'identification de mesure de détection comprennent au moins l'un des éléments suivants: une identification de session de détection ou une identification d'établissement de mesure de détection; et
un module de terminaison de détection (1102), configuré pour mettre fin à un proxy de la mesure de détection WLAN correspondant aux informations d'identification de la mesure de détection; dans lequel le point d'accès proxy (AP) est configuré pour, lorsqu'une station (STA) sert d'initiateur afin d'effectuer une communication un-à-plusieurs avec un répondeur, effectuer une mesure de détection WLAN en tant que proxy pour la station (STA) ;
dans lequel le module de détermination d'informations (1101) est en outre configuré pour recevoir une première requête de terminaison envoyée par la station STA, et pour obtenir les informations d'identification de la mesure de détection véhiculées dans la première requête de terminaison.

13. Dispositif destiné à mettre fin à un proxy de détection de réseau local sans fil (WLAN) appliqué à une station (STA), comprenant:
un module d'envoi de requêtes (1301), configuré pour envoyer une première requête de résiliation comportant des informations d'identification de mesure de détection à un point d'accès proxy (AP), afin d'ordonner au point d'accès proxy de mettre fin à un proxy d'une mesure de détection du réseau local sans fil (WLAN) correspondant auxdites informations d'identification de mesure de détection;
dans lequel les informations d'identification de la mesure de détection comprennent une identification de session de détection et/ou une identification d'établissement de mesure de détection ; et le point d'accès proxy est configuré pour, lorsque la station STA agit en tant qu'initiateur afin d'effectuer une communication un-à-plusieurs avec un répondeur, effectuer une mesure de détection WLAN en tant que proxy pour la station STA.

14. Support de stockage lisible par ordinateur, dans lequel le support de stockage lisible par ordinateur stocke un programme informatique, et lorsque le programme informatique est exécuté par un processeur, le procédé selon l'une quelconque des revendications 1 à 11 est implémenté.
